# EUROPEAN PATENT APPLICATION

(11) **EP 1 703 649 A1**
(43) Date of publication of application: **20.09.2006**
(21) Application number: 05290614.6
(22) Date of filing: 18.03.2005
(51) Int. Cl.: H04B 10/08

(54) **Method for adapting an optical transmission unit to a fixed optical transmission link, optical transmission unit and optical receive unit**

(71) Applicant: ALCATEL, 75008 Paris (FR)
(72) Inventor: Pfeiffer, Thomas, 70569 Stuttgart (DE)
(74) Representative: Brose, Gerhard

(57) **Abstract**

The invention relates to a method for adapting an optical transmission unit (TEi, CO) to a fixed optical transmission link (Li), in which the transmission unit (TEi, CO) measures the properties of the transmission link (Li) with respect to possible transmission capacity, as well as an optical transmission unit (TEi, CO), and an optical receive unit (CO, TEi).

## Description

The invention relates to a method for adapting an optical transmission unit to a fixed optical transmission link according to the preamble of claim 1, an optical transmission unit according to the preamble of claim 5, and an optical receive unit according to the preamble of claim 6.

In the emerging optical access to the telecommunications network there will be a demand for the users to be able to connect and put into operation their own terminals to the network without any intervention of the network provider.

The capacity of an optical access line depends on various factors among which the length of the line is the most important one. That means that terminals therefor need to have the possibility to operate even with the worst line and consequently with the lowest capacity. In case of better lines the rest of the capacity is lost.

The problem underlying the invention is to provide the possibility to a subscriber to use his or her own equipment without the intervention of the network provider and to nevertheless use the full capacity of the optical line.

According to the invention this problem is solved by a method according to the teachings of claim 1, an optical transmission unit according to the teachings of claim 5, and an optical receive unit according to the teachings of claim 6.

The idea is to automatically measure characteristics of the transmission link before or while using it for transmission of useful information and to adapt the terminal thereto.

Further embodiments of the invention are to be found in the subclaims and in the following description.

In the following the invention will be described in more details with the use of the drawing:
Figure 1 shows a telecommunications network and one of its access networks, in which the method according to the invention can be performed.
Figure 2 shows a terminal with both, the properties of an optical transmission unit according to the invention and the properties of an optical receive unit according to the invention.

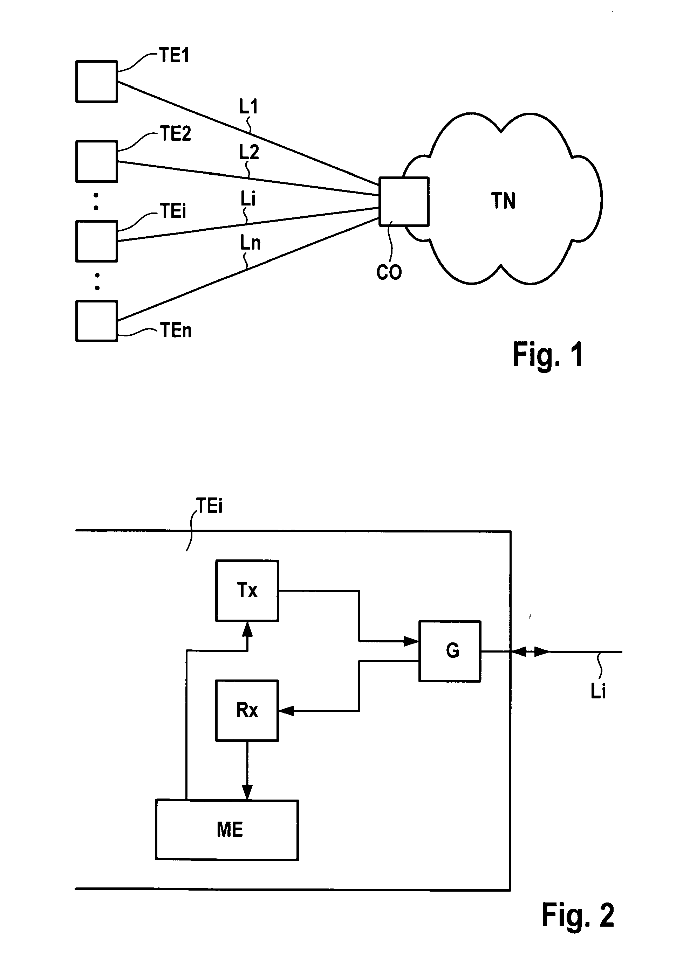

On the basis of Fig. 1 first a system is being described wherein the method according to the invention can be applied and in which units according to the invention can be used.

Fig. 1 shows a telecommunications network TN, a central office CO, terminals TE1, TE2, ..., TEi, ... TEn, and optical telecommunication links L1, L2, ..., Li, ..., Ln. The terminals TE1, TE2, ..., TEi, ... TEn are connected to the central office CO by means of the optical telecommunication links L1, L2, ..., Li, ..., Ln. The central office CO is located at the edge of the telecommunications network.

When a terminal TEi according to the invention is connected to the optical telecommunication link Li, the method according to the invention starts. The telecommunication terminal TEi starts measuring the properties of the transmission link Li with respect to possible transmission capacity and adapts itself to this link. From then on transmission is being performed using transmission parameters, especially transmission bitrate and modulation scheme, corresponding to the measured transmission capacity.

Measuring the properties of the transmission link Li may be repeated but needs not being repeated later on. This can be performed once a day, during each call setup, or the like.

One way of doing such measuring is in negotiating between the terminal TEi and the central office CO. This could be done in some kind of trial and error with continuously increasing the amount of test data sent per time unit until the connection fails. A reverse proceeding should come to the same result. Such measuring not only takes into account the optical transmission link's properties but also those of the involved terminal TEi and central office CO.

Such measuring can be made even while useful data are being transmitted.

Another possibility is the use of reflectrometrical methods. The light backscattered from the transmission link Li is measured and therefrom the properties of the transmission link are evaluated.

It would be possible to do such measuring in the time domain, especially measure a pulse response. With this one could get a good impression of the optical link along its course. But that is not what one needs in this situation. One should have an impression of what happens at the end of the link, especially how much diverges a puls at the end.

A better way here is to measure in the frequency domain. Such measures can be made by modulating the outgoing light with a sine. As one wants to find out the influence of dispersion one will have to use a sine with a frequency in the range of the bit rate. One can sweep the frequency from a lower value to a higher one. But one also could use only a couple of frequencies, e.g. a base frequency, the double frequency, the threefold frequency and so on until the n-fold frequency, where n may be in the range of seven. From the result one can deduce a measure for the dispersion a signal will undergo when propagating through the link and from this again one can deduce a maximum bit rate that can be used within this link. When measuring is done not from the transmit side but from the receive side one can directly measure the pulse form or the eye opening.

With the aid of Fig. 2 a terminal TEi is described in more detail. The terminal TEi includes a transmitter Tx, a receiver Rx, a gate G and measuring equipment ME. It is linked via the gate G to the optical link Li.

Transmitter Tx, receiver Rx, and gate G are responsible also for normal operation. Transmitter Tx includes an electro-optical converter like a laser. Receiver Rx includes an opto-electrical converter like a photo diode. Gate G may include a splitter or a mirror. The gate G should have the properties that light from the transmitter Tx only goes to the link Li and light coming from the link Li only goes to the receiver Rx.

The measuring equipment can impress a signal on the transmitter Tx and can tap the signal from the receiver Rx. In this way the measuring described above can be performed.

In principle such measuring can not only be performed from the terminals side but also from the central office CO. So both, terminal TEi or central office CO can be optical transmission unit in the sense of this invention. When the measuring is made by negotiating the respective other side is an optical receiver in the sense of this invention.

## Claims

1. Method for adapting an optical transmission unit (TEi, CO) to a fixed optical transmission link (Li) **characterized in, that** the transmission unit (TEi, CO) measures the properties of the transmission link (Li) with respect to possible transmission capacity.

2. The method according to claim 1, **characterized in, that** the transmission unit (TEi, CO) does the measuring in cooperation with a receive unit (CO, TEi) at the other end of the transmission link (Li).

3. The method according to claim 1, **characterized in, that** the transmission unit (TEi, CO) in order to measure the properties of the transmission link (Li) measures the backscattered light in the frequency domain and from this evaluates the properties of the transmission link (Li).

4. The method according to claim 3, **characterized in, that** a sine wave is used as measuring signal.

5. An optical transmission unit (TEi, CO) aimed at being connected to a fixed optical transmission link (Li), **characterized in, that** it comprises means (ME) for measuring the properties of the transmission link (Li) with respect to possible transmission capacity.

6. An optical receive unit (CO, TEi) aimed at being linked via a fixed optical transmission link (Li) to an optical transmission unit (TEi, CO), **characterized in, that** it comprises means (ME) for measuring the properties of the transmission link (Li) with respect to possible transmission capacity in cooperation with said optical transmission unit (TEi, CO).
